# EUROPEAN PATENT SPECIFICATION

(11) **EP 0 800 068 B1**
(45) Date of publication and mention of the grant of the patent: **16.04.2003**
(21) Application number: 97302135.5
(22) Date of filing: 27.03.1997
(51) Int. Cl.: G01K 13/02, G01K 7/22

(54) **Temperature sensor**
Temperaturfühler
Capteur de température

(30) Priority: 01.04.1996 GB 9606877
(43) Date of publication of application: 08.10.1997
(73) Proprietor: Ford Motor Company Limited, Brentwood, Essex CM13 3BY (GB); FORD FRANCE S.A., 92506 Rueil-Malmaison Cédex (FR); FORD-WERKE AKTIENGESELLSCHAFT, 50735 Köln (DE)
(72) Inventor: Cole, Andrew Robin, Benfleet, Essex SS7 4JW (GB)
(74) Representative: Messulam, Alec Moses

(56) References cited:
- EP-A- 0 579 541
- DE-A- 3 400 964
- GB-A- 2 045 529
- JP-A- 57 196 122
- US-A- 4 318 073

## Description

This invention relates to a temperature sender for use with a temperature indicator.

Temperature senders are used in many applications. Generally, an electronic sensor device, for example a thermistor, is housed in a metallic probe, which together with a temperature indicator may be used to measure temperature. The temperature sender "sends" a signal representing the sensed temperature to the indicator

In a motor vehicle, the metal housing may have an external thread, and be screw fitted into a matching port, for example, in a coolant circuit. If the port in the coolant circuit is also made from metal and grounded to the vehicle chassis, then just one wire to the temperature sender may be used to complete a circuit to the temperature indicator.

However, it is becoming increasingly common to substitute plastics materials wherever possible in motor vehicles, and if the port is in a plastic material, then a two wire connection will have to be made to the temperature sender. Although it is still generally desirable to make at least the probe portion of the temperature sender from a metal, for reasons of durability and high thermal conductivity, the-temperature sender will have to be altered in order to accommodate a second electrical connection to make a circuit to the temperature indicator.

EP 0 579 541 A and JP 57 196 122 A disclose senders that include two electrical connections and several electrically interconnected components to establish an electrical circuit with the sensor.

According to the invention, there is provided a temperature sender for use with a temperature indicator, comprising a housing joined to a body, wherein the housing has an electronic temperature sensor therein and a pair of contacts, each consisting of a single electrically conductive component, in direct abutting contact with the sensor for making a circuit therethrough; the body has two conductors, each of which passes through the body and includes a terminal which makes direct abutting contact with a respective one of the contacts to make an electrical connection therewith; and said direct abutting contacts are spring biased in a direction in which the body and housing are brought together when joined to each other.

The housing may have an elongate probe end, intended for insertion into a port, for example a port in a motor vehicle coolant circuit. The body may be adapted to provide two-wire electrical contact between a temperature indicator and the sensor.

Preferably, at least one of the terminals extends clear of the connector and is shaped, for example by folding or bending the conductor, so that the terminal is spring loaded when the terminal makes the sprung abutment with one of the contacts. The connector shape may be in a full or partial spring coil, for example as half turn of a helix.

It is advantageous if the housing is electrically conductive and has a contact surface forming one of the contacts. The housing may then be the same as or similar to a housing used to make an earth connection, for example via a grounded port in a motor vehicle coolant circuit.

The contact surface may have a recess therein within which the sensor is seated, the recess being opposite one of the terminals. The recess may be a hollow interior of the probe end of the housing.

The other of the terminals may then be curved at least part way around the recess to make the electrical connection with the contact surface.

The second sprung connection may then be made by a spring seated in the recess between the sensor and the terminal opposite the recess to act as a contact and make the spring biased abutment with the terminal.

Preferably, both of the terminals extend clear of the body, and one of the terminals is bent substantially through right angles to present a face towards the spring contact. The terminals may be made from flat wire or a rod with a rectangular cross section, with the wire or rod extending through the body substantially perpendicularly to the contacts, in which case the right angle bend in the terminal will present a flat surface of the terminal to the spring contact.

The sprung abutments may be made by relative movement between the housing and the body along an axis, for example an axis in line with a probe end of the housing and at right angles to contact surfaces. The terminals and contacts may then advantageously be shaped so that the relative rotational orientation of the housing and the body about the axis does not affect the electrical connection between the terminals and the contacts. The body may then be joined to the housing either at a random or an arbitrary relative rotational orientation, or at any specifically desired orientation, for example to help align any wires running from the body to the temperature indicator.

The conductors may terminate outside the temperature sender in two pins for making an electrical connection with the temperature indicator.

The body is preferably electrically insulating, for example being made from a plastics moulding. In certain environments, it may be desirable to provide an o-ring between the body and the housing to make a protective seal for the electrical connections inside the temperature sender.

Preferably, the body is made from a rigid material, such as a rigid injection moulded plastic. This helps to provide a good seal with the conductors running through the body.

If the housing has an external lip, for example being made from a thin metal rim or flange, and the body has an outward facing shoulder adapted to engage with the lip, the housing may be joined to the body by crimping the lip over the shoulder.

Alternatively, the housing may have an inwardly directed lip and the body one or more outwardly directed lugs which engage with the lip in a one-way press-fit engagement to keep the body joined to the housing.

The invention will now be further described by way of example with reference to the accompanying drawings, in which:
Figure 1 is a top plan view of a temperature sender according to a first embodiment of the invention;
Figure 2 is a partial cross section side view of the temperature sender of Figure 1, taken along the line II-II;
Figure 3 is a top plan view of a temperature sender according to a second embodiment of the invention;
Figure 4 is a partial cross section view of the temperature sender of Figure 3, taken along the line IV-IV;
Figure 5 is a cut away top plan view of the second embodiment of the temperature sender, showing two spring loaded conductors;
Figure 6 is a side view of the two spring loaded conductors of Figure 5, taken along the line VI-VI.

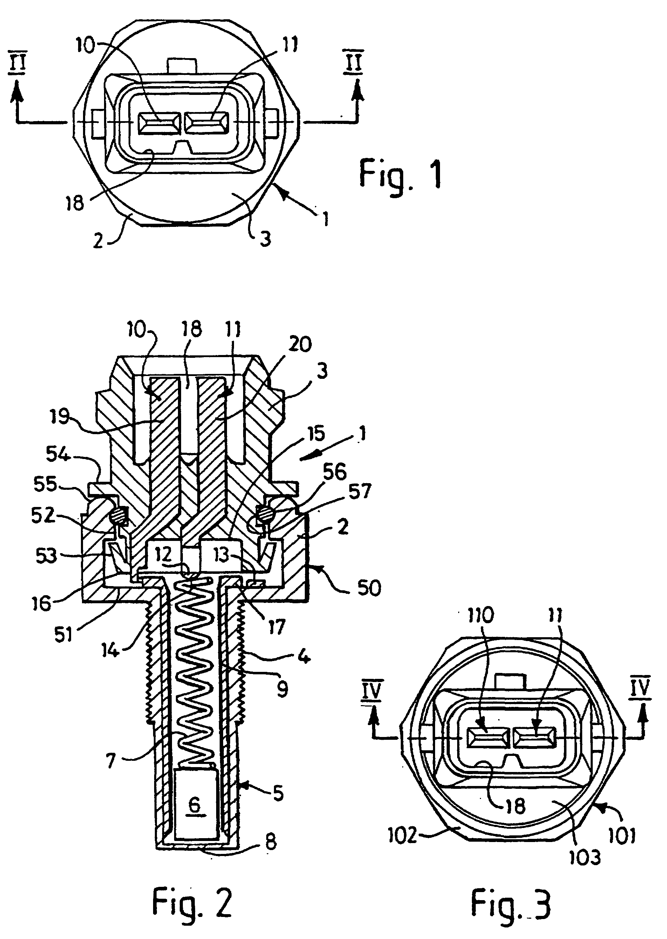

Figures 1 and 2 show a first embodiment of the temperature sender 1, comprising a brass housing 2 and a plastic connector body 3.

The housing has an external thread 4 for screwing the sender 1 into a port in a motor vehicle coolant circuit (not shown). Beyond the start of the thread, the housing has a tubular probe end 5 inside of which there is a thermistor temperature sensor 6. A metal spring 7 inside the probe end holds the thermistor 6 firmly against the inside of a circular end face 8 of the probe end 5.

Beyond the end of the thread, the housing 2 extends radially outwards to a generally cup shaped end 50 into which part of the body 3 is seated.

Electrical contacts are made to the ends of the cylindrical thermistor 6 via the metal spring 7 and the circular end face 8 of the housing probe end 5. The spring and the sides of the thermistor are insulated from the internal walls of the probe end by a surrounding nylon jacket 9.

The brass probe end 5 is of a known design originally intended to be screw fitted into a grounded port in a metal coolant line. In this case, only one other electrical connection would be made from a temperature indicator to the temperature sender, that is, the connection through the spring 7.

The temperature sender of the present invention is intended mainly for insertion into a non-grounded port, which may for example, be a plastic pipe in a motor vehicle coolant circuit (not shown). The body 3 therefore has two conductors 10,11 for making a circuit through the thermistor sensor 6. These conductors are insulated from each other and pass through the plastic body to terminate inside the cup 50 of the housing at two terminals 12,13.

One terminal 12 has a dimpled end 14 adapted to make a central electrical connection to the spring 7 and through the spring to one end of the thermistor 6. The other terminal 13 makes an electrical connection, around the periphery of the central terminal 12, to a floor contact 51 inside the cup shaped end 50 of the brass housing 2, to make electrical connection with the other end of the thermistor 6.

The central terminal 12 is at the end of the conductor 11 and extends clear of a central inner surface 15 of the body 3. Similarly, the peripheral terminal 13 extends clear of a peripheral inner surface 16 of the body.

The nylon jacket 9 has a flanged end 17 which extends radially from the jacket to present an annular insulating barrier between the two terminals 12,13.

The outer ends of the two conductors 10,11 also extend clear of the body 3 inside a socket 18 to present two pins 19,20 for connection to a matching socket (not shown).

The housing 2 is joined to the body 3 by in a one-way press-fit engagement by first inserting the terminal end of the body into the cup shaped end 50 of the housing. The housing has an inwardly directed lip 52 and the body has four outwardly directed lugs 53, spaced equidistantly around the circumference of the body. When the terminal end of the body is pressed into the cup end of the housing, the lugs 53 are first inwardly deflected by the lip 52, and when the body is fully inserted, the lugs spring outwards to engage with the lip and keep the body joined to the housing.

The body 3 also has an outwardly directed annular flange 54 which seats against a rim 55 around the housing cup end when the lugs 53 are engaged with the lip 52. This helps prevent over-insertion of the body into the housing so that the body is engaged solidly with the housing, and so that there is no, or very little, play along the axial direction of the temperature sender assembly 1.

An o-ring 56 is provided in a circumferential groove 57 around the body to make a seal against the inner surface of the housing cup end between the lip 53 and the rim 55, in order to protect the electrical connections inside the temperature assembly from the external environment, and to help prevent any corrosion of the electrical connections.

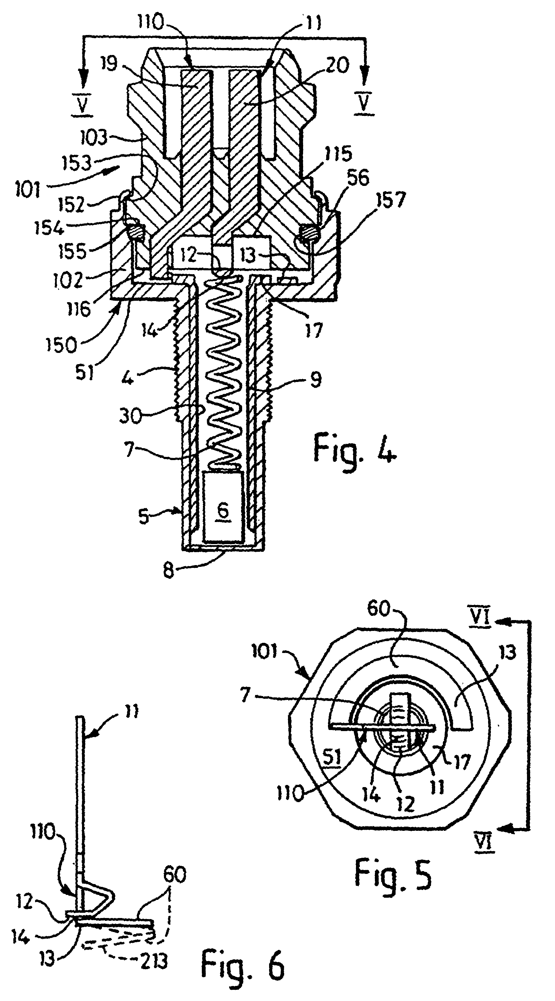

A second embodiment of the invention is shown in Figures 3 and 4. This second temperature sender 101 is similar to the first temperature sender 1 described above. Parts that are the same in the two embodiments are labelled with the same reference numerals, and parts that are similar or which serve a similar function are labelled with the value 100 added to the reference numeral.

The difference over the first embodiment is the means used to join the connector body 103 to the housing 102. The housing cup end 150 has a thin rim 152 which is inwardly crimped over an annular shoulder 153 extending outwards from the body 103. The body has an outwardly projecting annular lip 154 which seats against a matching inwardly projecting annular lip 155 to prevent over-insertion of the body into the cup end of the housing and to make the join secure.

The two type of join described above between the body and the housing do not need to be capable of disassembly. Should such a temperature sender fail, the sender unit would normally be discarded rather than repaired.

Two other views of the conductors 11,110 are shown in Figures 5 and 6 in order to illustrate how both electrical connections to the sensor 6 are made in a sprung contact or abutment between a contact and a terminal when the body is fitted to the housing.

Figure 5 shows a top plan view of the temperature sender 101 as if the plastic material of the body 103 were removed from view in order to expose the conductors 11,110 and the underlying housing 102.

Figure 6 shows a side view of the conductors 11,110 as if the body and housing were transparent. The view after the body is assembled with the housing is shown in solid outline; the view before the body is assembled with the housing is the same, except that the outer peripheral contact 13 is sprung away from the other central terminal 12, as shown in dashed outline.

Both conductors 11,110 are folded in order to present terminals 12,13 which extend generally parallel to the housing inner floor contact 51. One conductor 11 is first folded away from the length of the conductor, and then back so that the dimple 14 of the central terminal 12 is centred on the spring 7. The other conductor 110 is folded at nearly right angles into a half-turn of a helix 60 which, before the body is assembled with the housing, projects downwards as the dashed outline terminal 213.

The sprung contact or abutment between the terminals 11,110 and the spring and floor contacts 7,51 is therefore made and maintained on the one hand by compression of the helical portion 60 of one conductor 110 against the fixed floor contact 51, and on the other hand by compression of the spring contact 7 against the terminal 12 of the other conductor 11.

A temperature sender as described above may be used in either grounded or non grounded ports. If the port is grounded, then it is not necessary make a connection to the pin 19 in electrical connection with housing body contact, and a one wire socket may be connected to the connector body socket 18 make an electrical connection with the pin 20 in electrical connection with the spring contact. If the port is not grounded, then a two wire socket would be connected to the pins 19,20. The temperature sender may therefore be used in a wide range of applications, allowing time and cost to be saved in manufacture of a temperature measurement system.

Although the temperature sender has been illustrated and described in terms of the sprung abutment being provided in one instance by a spring contact 7, this sprung abutment could be provided by a suitably shaped terminal end. As is suggested by its shape, the central terminal 12 is somewhat compressible and does have some springiness. The spring contact 7, however, is a much softer spring than the central terminal 12, and so while the central terminal may compress slightly when in sprung abutment with the spring, it is the compressibility of the spring 7 that provides most of the sprung abutment in this instance. However, the possibility exists of eliminating the spring 7 and providing the sprung abutment entirely with a suitably shaped central terminal. The elimination of this component could save further cost, and allow a size reduction in the temperature sender.

## Claims

1. A temperature sender (1) for use with a temperature indicator, comprising a housing (2) joined to a body (3), wherein
the housing (2) has an electronic temperature sensor (6) therein and a pair of contacts (7,51), each consisting of a single electrically conductive component, in direct abutting contact with the sensor (6) for making a circuit therethrough;
the body (3) has two conductors (10,11), each of which passes through the body (3) and includes a terminal (12,13) which makes direct abutting contact with a respective one of the contacts (7,51) to make an electrical connection therewith; and
said direct abutting contacts are spring biased in a direction in which the body (3) and housing (2) are brought together when joined to each other.

2. A temperature sender (1) as claimed in Claim 1, in which at least one of the terminals (12,13) extends clear of the body (3) and is bent to create a resilient portion (60) to spring bias the terminal (12,13) when it makes the direct abutting contact with one of the contacts (7,51).

3. A temperature sender as claimed in Claim 1 or Claim 2, in which the housing (2) is electrically conductive and has a contact surface (51) forming one of the contacts.

4. A temperature sender as claimed in Claim 3, in which the contact surface (51) has a recess therein within which the sensor (6) is seated, the recess being opposite one of the terminals (12).

5. A temperature sender as claimed in Claim 4, in which the other one of the terminals (13) is curved at least part way around an open end of the recess on the contact surface to make the electrical connection with the contact surface.

6. A temperature sender (1) as claimed in Claim 4 or Claim 5, in which a spring (7) is seated in the recess between the sensor (6) and the terminal (12) opposite the recess, the spring (7) acting as a contact and making the spring biased abutment with said terminal (12).

7. A temperature sender (1) as claimed in Claim 6, in which both of the terminals (12,13) extend clear of the body (3), and the terminal (12) opposite the recess is bent substantially through right angles to present a face towards the spring contact.

8. A temperature sender (1) as claimed in any preceding claim, in which the sprung abutments are made by relative movement between the housing (2) and the body (3) along an axis, and the terminals (12,13) and contacts (7,51) are shaped so that the relative rotational orientation of the housing (2) and the body (3) about the axis does not affect the electrical connection between the terminals (12,13) and the contacts (7,51).

9. A temperature sender (1) as claimed in any preceding claim, in which the conductors (10,11) terminate outside the sender (1) in two pins (19,20) for making an electrical connection with the temperature indicator.

10. A temperature sender (1) as claimed in any preceding claim, in which an o-ring (56) is provided between the body (3) and the housing (2) to make a protective seal for the electrical connections inside the sender (1).

11. A temperature sender (1) as claimed in any preceding claim, in which the housing (2) has an external lip (152), the body (3) has an outward facing shoulder (153) and the housing (2) is joined to the body (3) by crimping the lip (152) over the shoulder (153).

12. A temperature sender (1) as claimed in any one of Claims 1 to 10, in which the housing (2) has an inwardly directed lip (52) and the body (3) has one or more outwardly directed lugs (53) which engage with the lip (52) in a one-way press-fit engagement to keep the body (3) joined to the housing (2).

## Patentansprüche

1. Ein Temperatursender (1) zum Gebrauch mit einer Temperaturanzeige, der ein mit einem Körper (3) verbundenes Gehäuse (2) umfaßt, wobei
das Gehäuse (2) einen elektronischen Temperatursensor (6) darin und ein Paar von Kontakten (7, 51) aufweist, die jeder aus einem einzigen elektrisch leitfähigen Bauteil in direkt anstoßendem Kontakt mit dem Sensor (6) bestehen, um einen Schaltkreis dort hindurch herzustellen;
der Körper (3) zwei Leiter (10, 11) besitzt, von denen jeder durch den Körper (3) hindurch reicht und ein Anschlußende (12, 13) einschließt, welches einen direkt anstoßenden Kontakt mit einem entsprechenden der Kontakte (7, 51) herstellt, um eine elektrische Verbindung damit herzustellen; und
diese direkt anstoßenden Kontakte in einer Richtung federbelastet sind, in welcher der Körper (3) und das Gehäuse (2) zusammengebracht werden wenn sie miteinander verbunden werden.

2. Ein Temperatursender (1) gemäß Anspruch 1, in welchem sich mindestens eines der Anschlußenden (12, 13) frei von dem Körper erstreckt und gebogen ist um einen federnden Abschnitt (60) zu schaffen, um das Anschlußende (12, 13) federnd vorzubelasten wenn es in den direkt anstoßenden Kontakt mit einem der Kontakte (7, 51) kommt.

3. Ein Temperatursender gemäß Anspruch 1 oder Anspruch 2, in welchem das Gehäuse (2) elektrisch leitfähig ist und eine Kontaktfläche (51) besitzt, die einen der Kontakte bildet.

4. Ein Temperatursender gemäß Anspruch 3, in welchem die Kontaktfläche (51) eine Aussparung darin aufweist, innerhalb welcher der Sensor (6) eingesetzt ist, wobei die Aussparung sich einem der Anschlußenden (12) gegenüber befindet.

5. Ein Temperatursender gemäß Anspruch 4, in welchem das andere der Anschlußenden (13) mindestens einen Teil um ein offenes Ende der Aussparung auf der Kontaktfläche herumgebogen ist, um die elektrische Verbindung mit der Kontaktfläche herzustellen.

6. Ein Temperatursender (1) gemäß Anspruch 4 oder Anspruch 5, in welchem eine Feder (7) in der Aussparung zwischen dem Sensor (6) und dem der Aussparung gegenüberliegenden Anschlußende (12) eingesetzt ist, wobei die Feder (7) als Kontakt wirkt und den federbelasteten Anstoß mit diesem Anschlußende (12) herstellt.

7. Ein Temperatursender (1) gemäß Anspruch 6, in welchem beide der Anschlußenden (12, 13) sich frei von dem Körper (3) erstrecken, und das Anschlußende (12) gegenüber der Aussparung im Wesentlichen durch rechte Winkel gebogen ist, um eine Fläche in Richtung auf den Federkontakt darzustellen.

8. Ein Temperatursender (1) gemäß einem der vorstehenden Ansprüche, in welchem die gefederten Anstöße durch eine relative Bewegung des Gehäuses (2) und des Körpers (3) entlang einer Achse hergestellt werden, und die Anschlußenden (12, 13) und Kontakte (7, 51) so geformt sind daß die relative Drehlage des Gehäuses (2) und des Körpers(3) um die Achse herum die elektrische Verbindung zwischen den Anschlußenden (12, 13) und den Kontakten (7, 51) nicht beeinträchtigt.

9. Ein Temperatursender (1) gemäß einem der vorstehenden ansprüche, in welchem die Leiter (10, 11) außerhalb des Senders (1) in zwei Stiften (19, 20) enden, um eine elektrische Verbindung mit der Temperaturanzeige herzustellen.

10. Ein Temperatursender (1) gemäß einem der vorstehenden Ansprüche, in welchem Ein O-Ring (56) zwischen dem Körper (3) und dem Gehäuse (2) bereitgestellt wird, um eine schützende Dichtung für die elektrischen Verbindungen innerhalb des Senders (1) herzustellen.

11. Ein Temperatursender (1) gemäß einem der vorstehenden Ansprüche, in welchem das Gehäuse (2) eine äußere Lippe (152) besitzt, der Körper (3) eine auswärts gerichtete Schulter (153) besitzt, und das Gehäuse (2) durch Krimpen der Lippe (152) über der Schulter (153) mit dem Körper (3) verbunden wird.

12. Ein Temperatursender (1) gemäß einem der Ansprüche 1 bis 10, in welchem das Gehäuse (2) eine nach innen gerichtete Lippe (52) besitzt, und der Körper (3) eine oder mehrere nach außen gerichtete Nasen (53 besitzt, welche an der Lippe (52) in einer Ein-Wege-Preßpassung angreifen, um den Körper (3) mit dem Gehäuse (2) verbunden zu halten.

## Revendications

1. Emetteur de température (1) en vue d'une utilisation avec un indicateur de température, comprenant un boîtier (2) relié à un corps (3), dans lequel
le boîtier (2) comporte un capteur de température électronique (6) dans celui-ci et une paire de contacts (7, 51), chacun étant constitué d'un seul composant électriquement conducteur, en contact de butée direct avec le capteur (6) en vue de réaliser un circuit au travers de celui-ci,
le corps (3) comporte deux conducteurs (10, 11), dont chacun traverse le corps (3) et comprend une borne (12, 13) qui réalise un contact de butée direct avec un contact respectif parmi les contacts (7, 51) afin de réaliser une connexion électrique avec celle-ci, et
lesdits contacts de butée directs sont sollicités par ressort dans une direction dans laquelle le corps (3) et le boîtier (2) sont réunis lorsqu'ils sont reliés l'un à l'autre.

2. Emetteur de température (1) selon la revendication 1, dans lequel au moins l'une des bornes (12, 13) s'étend en étant dégagée du corps (3) et est courbée pour créer une partie élastique (60) afin de solliciter par ressort la borne (12, 13) lorsqu'elle réalise le contact de butée direct avec l'un des contacts (7, 51).

3. Emetteur de température selon la revendication 1 ou 2, dans lequel le boîtier (2) est électriquement conducteur et comporte une surface de contact (51) formant l'un des contacts.

4. Emetteur de température selon la revendication 3, dans lequel la surface de contact (51) comporte un évidement dans celle-ci à l'intérieur duquel repose le capteur (6), l'évidement étant opposé à l'une des bornes (12).

5. Emetteur de température selon la revendication 4, dans lequel l'autre des bornes (13) est courbe au moins en partie autour d'une extrémité ouverte de l'évidement sur la surface de contact afin de réaliser la connexion électrique avec la surface de contact.

6. Emetteur de température (1) selon la revendication 4 ou la revendication 5, dans lequel un ressort (7) repose dans l'évidement entre le capteur (6) et la borne (12) à l'opposé de l'évidement, le ressort (7) agissant en tant que contact et réalisant la butée sollicitée par ressort avec ladite borne (12).

7. Emetteur de température (1) selon la revendication 6, dans lequel les deux bornes (12, 13) s'étendent de façon dégagée du corps (3) et la borne (12) opposée à l'évidement est pliée sensiblement à angle droit afin de présenter une face vers le contact à ressort.

8. Emetteur de température (1) selon l'une quelconque des revendications précédentes, dans lequel les butées élastiques sont réalisées par un déplacement relatif entre le boîtier (2) et le corps (3) le long d'un axe, et les bornes (12, 13) et les contacts (7, 51) sont mis en forme de sorte que l'orientation de rotation relative du boîtier (2) et du corps (3) autour de l'axe n'affecte pas la connexion électrique entre les bornes (12, 13) et les contacts (7, 51).

9. Emetteur de température (1) selon l'une quelconque des revendications précédentes, dans lequel les conducteurs (10, 11) aboutissent à l'extérieur de l'émetteur (1) en deux broches (19,20) en vue de réaliser une connexion électrique avec l'indicateur de température.

10. Emetteur de température (1) selon l'une quelconque des revendications précédentes, dans lequel un joint torique (56) est prévu entre le corps (3) et le boîtier (2) afin de réaliser un joint protecteur pour les connexions électriques à l'intérieur de l'émetteur (1).

11. Emetteur de température (1) selon l'une quelconque des revendications précédentes, dans lequel le boîtier (2) comporte une lèvre externe (152), le corps (3) comporte un épaulement tourné vers l'extérieur (153) et le boîtier (2) est relié au corps (3) en sertissant la lèvre (152) sur l'épaulement (153).

12. Emetteur de température (1) selon l'une quelconque des revendications 1 à 10, dans lequel le boîtier (2) comporte une lèvre dirigée vers l'intérieur (52) et le corps (3) comporte une ou plusieurs pattes dirigées vers l'extérieur (53) qui se mettent en prise avec la lèvre (52) suivant une mise en prise unidirectionnelle à ajustage serré afin de maintenir le corps (3) relié au boîtier (2).
